# EUROPÄISCHE PATENTANMELDUNG

(11) **EP 1 201 703 A1**
(43) Veröffentlichungstag der Anmeldung: **02.05.2002**
(21) Anmeldenummer: 01124241.9
(22) Anmeldetag: 16.10.2001
(51) Int. Cl.: C08K 3/00, C04B 24/28, C04B 24/42, C04B 28/24

(54) **Formkörper und Beschichtungen auf Basis von silanfunktionellen Bindern**

(30) Priorität: 27.10.2000 DE 10053347
(71) Anmelder: BAYER AG, 51368 Leverkusen (DE)
(72) Erfinder: Passing, Gerd, Dr., 50937 Köln (DE); Groth, Stefan, Dr., 51375 Leverkusen (DE)

(57) **Zusammenfassung**

Die Erfindung betrifft Formkörper und Beschichtungen auf Basis von silanfunktionellen Bindern, ein Verfahren zu ihrer Herstellung und ihre Verwendung.

## Beschreibung

Die Erfindung betrifft Formkörper und Beschichtungen auf Basis von silanfunktionellen Bindern, ein Verfahren zu ihrer Herstellung und ihre Verwendung.

Formkörper und Beschichtungen, die unter Verwendung von Füllstoffen und Bindern hergestellt wurden, können als Baustoffe eingesetzt werden, wenn sie bestimmte Eigenschaften aufweisen. Dies sind beispielsweise mechanische Festigkeit, Witterungsbeständigkeit, Chemikalienbeständigkeit, Feuerfestigkeit sowie geringe Wärmeleitfähigkeit bei Verwendung besagter Formkörper zur Isolierung und Dämmung von Wärmequellen.

Formkörper und Beschichtungen, die Füllstoffe enthalten, benötigen in der Regel Binder organischer oder anorganischer Natur. Sowohl die physikalischen Eigenschaften der Füllstoffe als auch der Binder beeinflussen die physikalischen Eigenschaften der Formkörper und Beschichtungen.

Anorganische Binder zeichnen sich beispielsweise durch große Härte, Wärmebeständigkeit und Hydrophilie aus und sind nicht entflammbar. Die gleichen Eigenschaften weisen auch Formkörper und Beschichtungen auf, die aus anorganischen Bindern und anorganischen Füllstoffen hergestellt sind. Werden organische Füllstoffe verwendet, so reduziert der anorganische Binder die Entflammbarkeit und die Brennbarkeit der Formkörper und Beschichtungen. Anorganische Binder sind beispielsweise Binder auf Wasserglasbasis.

In US 3,718,491 werden Formkörper, die als Binder eine Mischung aus Wasserglas und kolloidalem amorphen Kieselsol und als Füllstoffe Perlit enthalten, beschrieben. Diese Formkörper haben jedoch den Nachteil, dass eine Erweichung bei Wasserlagerung erfolgt.

Organische Binder verleihen Formkörpern und Beschichtungen Elastizität und wirken hydrophobierend. Allerdings sind sie meist leicht entflammbar und brennbar. Leicht entflammbare Formteile und Beschichtungen sind für viele Anwendungen aus Sicherheitsgründen nicht geeignet.

Um die günstigen Eigenschaften von anorganischen und organischen Bindern zu vereinen, wurden Mischungen aus organischen Polymeren und Kieselsäure als Binder verwendet.

In EP 924 232 A werden wässrige Dispersionen von Polyurethan/Harnstoffen, enthaltend Alkoxysilangruppen und kolloidales Silika, beschrieben. Der hohe Anteil von bis zu 90 Gew.-% organischem Material führt jedoch dazu, dass die Polymer-Silika-Mischung nach dem Trocknen brennbar ist, da sie ohne weitere Zusätze von Füllstoffen als Beschichtungsmittel eingesetzt wird. Der Zusatz von Füllstoffen wird zwar erwähnt, es wird jedoch keine Anleitung zur Herstellung von Formkörpern oder Beschichtungen, die Füllstoffe enthalten, gegeben.

In EP 829 459 A werden Formkörper auf Basis von Perlit als Füllstoff und einem Binder, welcher eine Mischung aus amorpher Kieselsäure und einem Alkylsilikonharz enthält, beschrieben. Die so hergestellten Formkörper eignen sich zur Isolierung von Wärmequellen und sind nicht brennbar. Gute Druckfestigkeiten wurden allerdings nur durch Zusatz von Polyvinylacetat erreicht. Nachteilig dabei ist, dass der Zusatz von Vinylacetat die Formkörper für Verseifüng anfällig macht.

Es bestand daher die Aufgabe, verseifungsfeste Formkörper und Beschichtungen bereitzustellen, die nicht brennbar sind und niedrige Wärmeleitfähigkeiten bei hohen Druckfestigkeiten aufweisen.

Überraschenderweise wurde nun gefunden, dass Formkörper und Beschichtungen, die Füllstoffe mit einem mittleren Teilchendurchmesser von > 400 nm und/oder einem Längen- zu Durchmesserverhältnis > 5 : 1 und einen Binder, enthaltend mindestens ein Hydrolyse- und/oder Kondensationsprodukt eines Polyisocyanatderivates und kolloidales Siliciumdioxid, dieses Anforderungsprofil erfüllen, wenn der Anteil an Polyisocyanatderivat im Formkörper oder in der Beschichtung 1-10 Gew.-%, bezogen auf den Feststoffanteil, beträgt.

Gegenstand der Erfindung sind somit Formkörper und Beschichtungen, enthaltend Füllstoffe mit einem mittleren Teilchendurchmesser > 400 nm und/oder einem Längen- zu Durchmesserverhältnis > 5 : 1 und Binder, enthaltend mindestens ein Hydrolyse und/oder Kondensationsprodukt eines Alkoxysilylgruppen und hydrophile Gruppen enthaltenden Polyisocyanatderivates und kolloidales Siliciumdioxid, wobei der Anteil an Polyisocyanatderivat im Formkörper oder in der Beschichtung 1-10 Gew.-%, bezogen auf den Feststoffanteil, beträgt.

In einer bevorzugten Ausrührungsform der erfindungsgemäßen Formkörper und Beschichtungen beträgt der Anteil an Polyisocyanatderivat im Formkörper oder in der Beschichtung 1-5 Gew.-%, bezogen auf den Feststoffanteil.

In einer besonders bevorzugten Ausführungsform der erfindungsgemäßen Formkörper und Beschichtungen beträgt der Anteil an Polyisocyanatderivat im Formkörper oder in der Beschichtung 1,5-3,5 Gew.-%, bezogen auf den Feststoffanteil.

Füllstoffe im Sinne der Erfindung sind sowohl organischer als auch anorganischer Natur. Es können ein- oder mehrphasige, amorphe, teilkristalline, ein- oder polykristalline, kompakte oder poröse Füllstoffe eingesetzt werden. Die Füllstoffe lassen sich bezüglich ihrer Form in Fasern und Teilchen einteilen. Die äußere Form der Teilchen kann würfelförmig, quaderförmig, prismatisch, pyramidal, polyedrisch, zylindrisch, kegelförmig, kugelförmig, elliptisch, dendritisch, unregelmäßig oder knollenförmig sein. Fasern unterscheiden sich von Teilchen durch ihr mikroskopisch ermitteltes Längen- zu Durchmesserverhältnis von > 5 : 1. Sogenannte Langfasern mit einer Länge > 1 m können sowohl aus einer einzigen Faser als auch aus mehreren verzwirnten kürzeren Fasern bestehen.

Bevorzugt sind anorganische Füllstoffe. Bevorzugte anorganische Füllstoffe sind Metall-, Halbmetall- und Nichtmetalloxide, -silikate, -nitride, -carbide, -carbonitride und -carbonate, Glas oder Glaskeramik wie beispielsweise Eisenoxide, Aluminiumoxide, Siliciumoxide, Boroxide, Zirkoniumoxide, Magnesiumoxide, Calciumoxide, Magnesiumsilikate, Calciumsilikate, Alumosilikate, Zirkoniumsilikate, Titancarbid, Siliciumcarbid, Borcarbide, Titannitrid, Siliciumnitride, Bornitrid, Calciumcarbonat, Magnesiumcarbonat, Dolomit oder Mullit. Besonders bevorzugt sind witterungsbeständige und/oder chemikalienbeständige anorganische Füllstoffe wie beispielsweise Siliciumdioxid, Aluminiumoxid, Eisenoxide, Alumosilikate, Calciumsilikate, Magnsiumsilikate, Zirkoniumsilikate, Siliciumcarbid, Siliciumnitride wie Si₃N₄, Bornitrid, Calciumcarbonat, Magnesiumcarbonat, Dolomit, Glas, Glaskeramik oder Mullit.

Weiterhin werden besonders bevorzugt anorganische Füllstoffe eingesetzt, die eine Wärmeleitfähigkeit < 2 W/mK aufweisen wie beispielsweise Perlit, Bornitrid, Glas oder Glaskeramik. Ganz besonders bevorzugt werden als Füllstoffe poröse Füllstoffe wie Hohlkugelkorund, Hohlglaskügelchen, Blähglas, Perlit, Vermikulit, Blähton. Blähschamotte und Kieselgur eingesetzt.

Ebenfalls besonders bevorzugt sind Füllstoffe, die in der Lage sind, mit dem Binder zu reagieren. Insbesondere sind dies Füllstoffe, die Hydroxygruppen auf ihrer Oberfläche tragen, wie beispielsweise Silikate, Perlit, Silicumnitride oder Siliciumcarbide.

Es können auch Mischungen verschiedener Füllstoffe eingesetzt werden.

Vorzugsweise ist der mittlere Teilchendurchmesser der Füllstoffe > 400 nm, bevorzugt zwischen 1 µm und 10 mm, besonders bevorzugt zwischen 100 µm und 6 mm.

Bevorzugte Binder im Sinne der Erfindung sind solche, die 10-95 Gew.-% kolloidales Siliciumdioxid und 90-5 Gew.-% mindestens eines Hydrolyse- und/oder Kondensationsprodukt eines Alkoxysilylgruppen und hydrophile Gruppen enthaltenden Polyisocyanatderivates, bezogen auf den Feststoffanteil des Binders, enthalten.

Besonders bevorzugte Binder enthalten 30-90 Gew.-% kolloidales Siliciumdioxid und 70-10 Gew.-% mindestens eines Hydrolyse- und/oder Kondensationsprodukt eines Alkoxysilylgruppen und hydrophile Gruppen enthaltenden Polyisocyanatderivates, bezogen auf den Feststoffanteil des Binders.

Ganz besonders bevorzugte Binder enthalten 70-85 Gew.-% kolloidales Siliciumdioxid und 30-15 Gew.-% mindestens eines Hydrolyse- und/oder Kondensationsprodukt eines Alkoxysilylgruppen und hydrophile Gruppen enthaltenden Polyisocyanatderivates, bezogen auf den Feststoffanteil des Binders.

Bei den Alkoxysilylgruppen und hydrophile Gruppen enthaltenden Polyisocyanatderivaten (im Folgenden kurz als Polyisocyanatderivate bezeichnet) im Sinne der Erfindung handelt es sich vorzugsweise um Reaktionsprodukte aus mindestens einer Polyisocyanatkomponente A, einem aminofunktionellen Silan B und mindestens einer hydrophilen Komponente C.

Die Polyisocyanatderivate weisen vorzugsweise einen Gehalt an Alkoxysilylgruppen von 1 - 6 Gew.-% auf und enthalten praktisch keine freien Isocyanatgruppen mehr, d.h. der NCO-Gehalt ist < 0,1 %. In den Polyisocyanatderivaten im Sinne der Erfindung sind die aminofunktionellen Silane vorzugsweise durch Harnstoffbindungen, gegebenenfalls durch Hydantoinbindungen, an die Polyisocyanatkomponenten gebunden, während die hydrophilen Komponenten bevorzugt über Urethanbindungen an die Polyisocyanatkomponenten angeknüpft sind.

Die zur Herstellung der Polyisocyanatderivate eingesetzten Polyisocyanatkomponenten A enthalten vorzugsweise monomere Polyisocyanate und Polyisocyanat-Addukte und weisen bevorzugt eine mittlere NCO-Funktionalität von 2,4 - 6, besonders bevorzugt 2,6 bis 5 und ganz besonders bevorzugt eine mittlere NCO-Funktionalität von 2,8 bis 4 auf. Dabei können die Polyisocyanatkomponenten auch monomere Polyisocyanate und Polyisocyanat-Addukte enthalten, die alleine den Anforderungen für die Funktionalität nicht genügen, solange die mittlere Funktionalität der Polyisocyanatkomponenten in dem beschriebenen Rahmen liegt.

Die Polyisocyanatkomponenten enthalten bevorzugt mindestens 50 Gew.-%, besonders bevorzugt mindestens 70 Gew.-%, ganz besonders bevorzugt mindestens 95 Gew.-% an Polyisocyanat-Addukten, welche Isocyanurat-, Uretdion-, Biuret-, Urethan-, Allophanat-, Carbodiimid- oder Iminoxadiazindion-Strukturen aufweisen. Zusätzlich können die Polyisocyanatkomponenten monomere Polyisocyanate und/oder andere Polyisocyanat-Addukte enthalten.

Bei den in den Polyisocyanatkomponenten enthaltenden Polyisocyanat-Addukten handelt es sich bevorzugt um solche, die üblicherweise als Härter für zweikomponentige Urethanlacke Verwendung finden und in "Lackharze: Chemie, Eigenschaften und Anwendungen", Hrsg. D. Stoye, W. Freitag, Hanser Verlag München, Wien, 1996, beschrieben sind. Diese Polyisocyanat-Addukte enthalten vorzugsweise Isocyanurat- Biuret-, Allophanat- und/oder Uretdiongruppen und weisen mittlere NCO-Funktionalitäten vom vorzugsweise 2 - 6 sowie einen NCO-Gehalt von vorzugsweise 5 - 30 Gew.-% auf. Ganz besonders bevorzugt sind Trimerisate (Isocyanurate) von 1,6-Hexadiisocyanat mit einer mittleren NCO-Funktionalität von 3 - 4 und einem NCO-Gehalt von 15 bis 25 Gew.-%.

Bei den in den Polyisocyanatkomponenten enthaltenen monomeren Polyisocyanaten handelt es sich um Isocyanate, die zwei oder mehr Isocyanatgruppen enthalten, bevorzugt handelt es sich um solche, die zwei Isocyanatgruppen enthalten. Bei den monomeren Isocyanaten die drei oder mehr Isocyanatgruppen enthalten sind 4-Isocyanatomethyl-1,8-octandiisocyanat und aromatische Polyisocyanate wie 4, 4', 4"-Triphenylmethantriisocyanat oder Polyphenylpolymethylenpolyisocyanate bevorzugt.

Bevorzugte monomere Isocyanate, die zwei Isocyanatgruppen enthalten, werden durch die allgemeine Formel R(NCO)₂ repräsentiert, wobei R für einen difunktionellen organischen Rest steht, der vorzugsweise ein Molgewicht von 56 bis 1000, besonders bevorzugt von 70 bis 320 aufweist. Bevorzugt sind Diisocyanate, bei denen R für einen difunktionellen C₄-C₄₀-Kohlenwasserstoffrest, besonders bevorzugt einen difunktionellen aliphatischen C₄-C₁₈-Rest, einen difunktionellen cycloaliphatischen C₅-C₁₅-Rest, einen difunktionellen araliphatischen C₇-C₁₅-Rest, oder einen difunktionellen aromatischen C₆-C₁₅-Rest steht.

Beispiele bevorzugter Diisocyanate sind 1,4-Butandiisocyanat, 1,6-Hexandiisocyanat, 2,2,4-Trimethyl-1,6-hexandiisocyanat, 1,12-Dodecandiisocyanat, 1,3-Cyclohexandiisocyanat, 1,4-Cyclohexandiisocyanat, 1-Isocyanato-2-(isocyanatomethyl)-cyclopentan, 1-Isocyanato-3-(isocyanatomethyl)-3,5,5-trimethylcyclohexan, Bis(4-isocyanatocyclohexyl)-methan, 2,4-Dicyclohexylmethandiisocyanat, 1,3-Bis-(isocyanatomethyl)-cyclohexan, 1,4-Bis-(isocyanatomethyl)-cyclohexan, Bis(4-isocyanato-3-methylcyclohexyl)-methan, α,α,α'α'-Tetramethyl-1,3-xylylendiisocyanat, α,α,α'α'-Tetramethyl-1,4-xylylen-diisocyanat, 1-Isocyanato-1-methyl-4(3-isocyanatomethyl)cyclohexan, 2,4'-Hexahydrotoluylen-diisocyanat, 2,6-Hexahydrotoluylendiisocyanat, 1,3-Phenylendiisocyanat, 1,4-Phenylendiisocyanat, 2,4-Toluylen-diisocyanat, 2,6-Toluylendiisocyanat, 2,4-Diphenylmethandiisocyanat, 4,4'-Diphenylmethandiisocyanat oder 1,5-Naphthylendisocyanat.

Besonders bevorzugte Diisocyanate sind 1,6-Hexandiisocyanat, 1-Isocyanato-3-(isocyanatomethyl)-3,5,5-trimethylcyclohexan, Bis(4-isocyanatocyclohexyl)-methan, 2,4-Toluylen-diisocyanat, 2,6-Toluylendiisocyanat, 2,4-Diphenylmethandiisocyanat und 4,4-Diphenylmethandiisocyanat.

Die zur Herstellung der Polyisocyanatderivate eingesetzten aminofunktionellen Silane B entsprechen vorzugsweise der Formel (I)

R¹-NH-(CH₂)₃-SiXYZ (I)

worin
- R¹: bevorzugt für einen unterhalb von 100°C gegenüber Isocyanatgruppen inerten organischen Rest steht und
- X, Y, Z: bevorzugt für gleiche oder verschiedene, unterhalb von 100°C gegenüber Isocyanatgruppen inerte organische Reste stehen, wobei mindestens ein Rest eine Alkoxygruppe ist.

Besonders bevorzugt steht
- R¹: für einen Alkyl-, Cycloalkyl- oder Arylrest mit 1 bis 12 C-Atomen, ganz besonders bevorzugt für einen Alkyl-, Cycloalkyl- oder Arylrest mit 1 bis 8 C-Atomen, wobei die Reste gegebenenfalls einen oder mehrere Substituenten des Typs Si(OR³)₃, wobei R³ für einen C₁-C₅-Alkylrest steht, einen oder mehrere Substituenten des Typs N(R⁴)₂, wobei R⁴ für Wasserstoff oder für einen C₁-C₅-Alkylrest steht, tragen oder eine oder mehrere Esterfunktionen aufweisen,
- X, Y, Z: für zwei gleiche oder verschiedene C₁-C₄-Alkylreste und eine Alkoxygruppe oder für einen C₁-C₄-Alkylrest und 2 Alkoxygruppen steht, ganz bevorzugt sind X, Y und Z gleich und stehen für eine Alkoxygruppe, insbesondere für eine C₁-C₄-Alkoxygruppe wie beispielsweise Methoxy oder Ethoxy.

Ganz besonders bevorzugt sind aminofunktionelle Silane der Formel (I), worin R¹ für R⁵O-CO-CH₂-CH-CO-OR⁶ steht, wobei R⁵ und R⁶ gleich oder verschieden sind und für unterhalb 100°C gegenüber Isocyanatgruppen inerte organische Reste stehen. Bevorzugt sind R⁵ und R⁶ gleich und stehen für C₁-C₉-Alkyl, ganz besonders bevorzugt für Methyl, Ethyl und Butyl.

Die Synthese der aminofunktionellen Silane der Formel (I) worin R¹ für R⁵O-CO-CH₂-CH-CO-OR⁶ steht ist in EP 596 360 A beschrieben und erfolgt durch Reaktion durch Aminosilanen mit Malein- oder Fumarsäureestern. Das entstandene Reaktionsprodukt kann ohne weitere Reinigung zur Herstellung der Polyisocyanatderivate eingesetzt werden.

Die zur Herstellung der Polyisocyanatderivate eingesetzten hydrophilen Komponenten C enthalten vorzugsweise lateral- und/oder terminale Ethylenoxideinheiten und/oder ionische Gruppen bzw. deren Vorläufer.

Bevorzugte hydrophile Komponenten mit Ethylenoxideinheiten sind beispielsweise in US 3,905,929, US 3,920,598 und US 4,190,566 beschrieben. Besonders bevorzugt sind monohydroxyfunktionelle Polyether mit terminalen hydrophilen Ketten aus Ethylenoxideinheiten. Ganz besonders bevorzugt sind Methanol-gestartete Ethylenoxid-Polyether mit einem mittleren Molekulargewicht von 100 bis 1000, besonders bevorzugt von 300 bis 900, ganz besonders bevorzugt von 450 bis 800.

Als ionische hydrophile Komponenten können entweder Verbindungen eingesetzt werden, die ionische Gruppen aufweisen oder bei denen ionische Gruppen aus entsprechenden Vorläufern durch Zusatz eines Neutralisationsmittels entstehen. Die ionischen Gruppen können sowohl kationischer als auch anionischer Natur sein. Bevorzugte kationische Gruppen sind Sulfonium- oder Ammoniumgruppen. Bevorzugte anionische Gruppen sind Carboxylat- oder Sulfonatgruppen. Geeignete hydrophile Komponenten zur Einbringung von Carboxylat-, Sulfonat- oder Ammoniumgruppen sind in US 3,479,310, US 4,108,814 und US 4,303,744 beschrieben. Geeignete hydrophile Komponenten zur Einbringung von Sulfoniumgruppen werden in US 3,41,533 beschrieben. Bevorzugte ionische hydrophile Komponenten oder deren Vorläufer sind Diolsulfonate, Dimethylolpropionsäure und Hydroxypivalinsäure. Besonders bevorzugt ist Dimethylolpropionsäure.

Der Begriff "Neutralisationsmittel" umfasst dabei alle Verbindungen, die zur Überführung von entsprechenden Vorläufern in ionische Gruppen benutzt werden können. Geeignete Neutralisationsmittel sind in US 3,479,310, US 4,108,814, US 3,419,533 und US 4,303,744 beschrieben. Bevorzugte Neutralisationsmittel sind tertiäre Amine. Besonders bevorzugte Neutralisationsmittel sind Triethylamin und N,N-Dimethylethanolamin.

Besonders bevorzugt ist der gemeinsame Einsatz von ionischen hydrophilen Komponenten oder deren Vorläufern und hydrophilen Komponenten mit Ethylenoxideinheiten. Hierdurch ist die beste Verträglichkeit mit dem zur Binderherstellung eingesetzten kolloidalen Siliciumdioxid gegeben und die Polyisocyanatderivate zeigen eine hervorragende Dispergierbarkeit.

Besonders bevorzugt sind bei dem gemeinsamen Einsatz von ionischen hydrophilen Komponenten oder deren Vorläufern und hydrophilen Komponenten mit Ethylenoxideinheiten Methoxypolyethylenglykole mit einem mittleren Molekulargewicht von 450 bis 800, bevorzugt 700 bis 800, im gemeinsamen Einsatz mit Dimethylolpropionsäure als Vorläufer und N,N-Dimethylethanolamin als Neutralisationsmittel.

Zur Herstellung der Polyisocyanatderivate werden die aminofunktionellen Silane anteilig so verwendet, dass die Polyisocyanatderivate einen Siliciumgehalt (berechnet als Si-Atom, Mw = 28) von 1 - 6 Gew.-%, bevorzugt 2 - 6 Gew.-% und besonders bevorzugt 2 - 5 Gew.-%, bezogen auf den Feststoffanteil, enthalten.

Werden zur Herstellung der Polyisocyanatderivate nur hydrophile Komponenten mit Ethylenoxideinheiten verwendet, so werden bevorzugt 5 bis 30 Gew.-%, besonders bevorzugt 10 bis 30 Gew.-%, ganz besonders bevorzugt 12 bis 25 Gew.-% dieser Komponenten in das Reaktionsprodukt eingebaut.

Werden zur Herstellung der Polyisocyanatderivate nur ionische hydrophile Komponenten oder deren Vorläufer verwendet, so werden bevorzugt 100 bis 2000 Milliäquivalente pro 1000 g des Reaktionsproduktes eingebaut, besonders bevorzugt 100 bis 1000, ganz besonders bevorzugt 250 bis 500.

Werden zur Herstellung der Polyisocyanatderivate sowohl ionische hydrophile Komponenten oder deren Vorläufer als auch hydrophile Komponenten mit Ethylenoxideinheiten verwendet, so werden bevorzugt 2 bis 20 Gew.-%, besonders bevorzugt 5 bis 15 Gew.-% Ethylenoxideinheiten, sowie 50 bis 200 Milliäquivalente ionische Gruppen, bevorzugt 100 bis 160 Milliäquivalente ionische Gruppen pro 1000 g des Reaktionsproduktes eingebaut. Ganz besonders bevorzugt sind dabei als ionische Gruppen Carboxylatgruppen. Werden die ionischen Gruppen aus Vorläufern durch Zusatz eines Neutralisationsmittels hergestellt, so liegt der Neutralisationsgrad in den Polyisocyanatderivaten bevorzugt bei 0,7 - 2,0, besonders bevorzugt bei 1,0 - 1,5.

Die Herstellung der Polyisocyanatderivate erfolgt durch Umsetzung mindestens einer Polyisocyanatkomponente A mit mindestens einer hydrophilen Komponente C und einem aminofunktionellen Silan B vorzugsweise so, dass das Verhältnis von Isocyanatgruppen zu gegenüber Isocyanat reaktiven Gruppen bei etwa 1 liegt und das Reaktionsprodukt praktisch keine freien NCO-Gruppen mehr aufweist.

Die Herstellung erfolgt bevorzugt in der Weise, dass mindestens eine Komponente C und mindestens eine Komponente B zu mindestens einer Komponente A nach und nach zudosiert wird. Dabei können C und B als Mischung zudosiert werden oder einzeln nacheinander zugegeben werden. Bevorzugt wird C zuerst zu A zugesetzt und anschließend B zugegeben.

Wird zuerst C zu A zudosiert, so erfolgt die Umsetzung bevorzugt bei Temperaturen von 20 bis 150°C, besonders bevorzugt bei Temperaturen von 50 bis 120°C, ganz besonders bevorzugt bei Temperaturen von 60 bis 100°C. Die Zugabe von B erfolgt bevorzugt bei Temperaturen von 10 bis 100°C, besonders bevorzugt bei Temperaturen von 20 bis 80°C, ganz besonders bevorzugt bei Temperaturen von 20 bis 50°C. Dabei kommt es zu einer Harnstoffbindung zwischen Silan und Polyisocyanatkomponente. Diese Bindungen können gegebenenfalls, wie in US 3,549,599 beschrieben, unter Zusatz eines Katalysators in Hydantoinbindungen umgewandelt werden.

Gegebenenfalls können zur Herstellung der Polyisocyanatderivate Lösungsmittel zugesetzt werden. Dabei sind polare Lösungsmittel bevorzugt. Besonders bevorzugt sind polare Lösungsmittel, die mit Wasser mischbar sind. Bevorzugte Lösungsmittel sind Methanol, Ethanol, Isopropanol, Dioxan, N,N-Dimethylformamid, N,N-Dimethylacetamid, N-Methylpyrrolidon und Dimethylsulfoxid. Besonders bevorzugt ist N-Methylpyrrolidon.

Neben mindestens einem Hydrolyse- und/oder Kondensationsprodukt eines Alkoxygruppen- und hydrophile Gruppen enthaltenden Polyisocyanatderivates enthalten Binder im Sinne der Erfindung kolloidales Siliciumdioxid.

Das kolloidale Siliciumdioxid kann pulverförmig oder als Dispersion eingesetzt werden. Beispiele für pulverförmiges Siliciumdioxid sind Aerosil® oder Kieselgur, auch Molerde oder Diatomeenerde genannt. Pulverförmiges Siliciumdioxid wird so aufbereitet, dass die mittlere Teilchengröße < 500 nm, bevorzugt zwischen 500 nm und 2 nm liegt. Das kolloidale Siliciumdioxid kann auch als wässrige oder alkoholische Dispersion eingesetzt werden. Bevorzugt wird eine wässrige Dispersion eingesetzt. Besonders bevorzugt handelt es sich dabei um wässrige Kieselsole, wie beispielsweise Lewasil® oder Ludox® .

In den Bindern im Sinne der Erfindung kann das kolloidale Siliciumdioxid teilweise durch kolloidales Aluminiumoxid und/oder Borsäure ersetzt sein. Dabei weist das kolloidale Aluminiumoxid vorzugsweise eine Teilchengröße < 500 nm und Borsäure vorzugsweise eine mittlere Teilchengröße < 5 µm auf. Das gegebenenfalls eingesetzte kolloidale Aluminiumoxid und/oder die Borsäure können *in situ* durch Mischung von Kieselsol mit Aluminium- und/oder Boralkoxiden hergestellt werden.

Vorzugsweise ist 0 bis 50 Gew.-% des kolloidalen Siliciumdioxids im Binder durch kolloidales Aluminiumoxid und/oder Borsäure ersetzt.

Weiterhin kann in den Bindern im Sinne der Erfindung kolloidales Siliciumdioxid teilweise durch Hydrophobierungsmittel ersetzt sein.

Als Hydrophobierungsmittel sind handelsübliche Hydrophobierungsmittel wie beispielsweise Silikonöle, alkylierte Alkoxysilane oder alkylierte Alkoxysiloxane geeignet. Bevorzugte Hydrophobierungsmittel sind Baysilone® -Imprägnieremulsion LD und Baysilone® -Imprägnieremulsion WA.

Außer Füllstoffen und Binder enthalten die erfindungsgemäßen Formkörper und Beschichtungen gegebenenfalls Vernetzungskatalysatoren und/oder Formgebungsmittel.

Vernetzungskatalysatoren tragen zur schnelleren Verfestigung des Binders bei. Geeignete Vernetzungskatalysatoren im Sinne der Erfindung sind Säuren wie beispielsweise p-Toluolsulfonsäure, Essigsäure, Ameisensäure oder Salzsäure, Basen wie beispielsweise Natronlauge oder Ammoniak, metallorganische Verbindungen wie beispielsweise Dibutylzinnlaurat, Metall- oder Halbmetallalkoxide oder Harnstoff.

Geeignete Formgebungshilfsmittel sind höhermolekulare polymere Verbindungen wie beispielsweise Polyethylenglykole, Polyvinylalkohole, Celluloseether oder Stärke.

Formkörper im Sinne der Erfindung sind bevorzugt Baustoffe, Dämmstoffe oder Gießformen zur Herstellung von Metallgussteilen. Bevorzugte Baustoffe sind Balken, Stützen, Steine, Platten, Fliesen, Halbschalen, komplizierte Formstücke und Filter. Bevorzugte Dämmstoffe sind Wärme- und Schalldämmstoffe wie Steine, Platten, Fliesen, Halbschalen, komplizierte Formstücke und Matten.

Beschichtungen im Sinne der Erfindung sind bevorzugt solche, die eine Dicke von mindestens einem Zentimeter aufweisen.

Gegenstand der Erfindung ist weiterhin ein Verfahren zur Herstellung von Formkörpern und Beschichtungen, enthaltend Füllstoffe mit einem mittleren Teilchendurchmesser > 400 nm und/oder einem Längen- zu Durchmesserverhältnis > 5 : 1 und Binder, enthaltend mindestens ein Hydrolyse und/oder Kondensationsprodukt eines Alkoxysilylgruppen und hydrophile Gruppen enthaltenden Polyisocyanatderivates und kolloidales Siliciumdioxid, wobei der Anteil an Polyisocyanatderivat im Formkörper oder in der Beschichtung 1-10 Gew.-%, bezogen auf den Feststoffanteil, beträgt, welches dadurch gekennzeichnet ist, dass die Füllstoffe und Binder gemischt werden, gegebenenfalls Vernetzungskatalysatoren und/oder Formgebungsmittel zudosiert werden, diese Mischung anschließend eine Formgebung erfährt und getrocknet und ausgehärtet wird.

Die Mischung der Komponenten erfolgt bei im Vergleich zum Volumen der Füllstoffe kleinen Bindervolumina bevorzugt so, dass der Binder zu den Füllstoffen zudosiert wird. Wird mit im Vergleich zum Volumen der Füllstoffe großen Bindervolumina gearbeitet, so erfolgt die Mischung der Komponenten bevorzugt so, dass die Füllstoffe in den Binder eingetragen werden.

Geeignete Mischgeräte zum Mischen von Binder, Füllstoff und gegebenenfalls Vernetzungskatalysator und Formgebungsmittel, sind je nach Viskosität der entstehenden Mischung Eirich-Mischer, Pflugscharmischer, Extruder, Rührkessel oder Kneter, aber auch Einrichtungen, bei denen der Binder auf die Füllstoffe aufgesprüht wird. Werden Langfasern als Füllstoffe verwendet, können diese auch durch Binder-Tauchbad gezogen werden oder über Präparationsrollen mit dem Binder beschichtet werden.

Zur Formgebung der Mischungen können alle gängigen Formgebungsverfahren für Pulver, viskose Massen und niedrigviskose Massen angewendet werden.

Beispiele für Formgebungsverfahren sind Einrütteln, Stampfen, axiales, biaxiales und isostatisches Pressen oder Extrudieren. Zur Formgebung von niedrigviskosen Massen ist der Schlickerguss geeignet. Ein weiteres Verfahren zur Formgebung ist das Auftragen von Schichten auf Trägern, die die fertige Form bestimmen. Das Auftragen dieser Schichten kann beispielsweise durch Auftragspritzen oder durch Tauchen des Trägers in eine niedrigviskose Mischung erfolgen. Das Auftragspritzen kann verwendet werden, um beliebige Gegenstände oder Anlagen zu beschichten oder auszukleiden.

Nach der Formgebung schließt sich ein Trocknungsschritt an, bei dem die erfindungsgemäßen Formkörper oder Beschichtungen, bevorzugt bei Temperaturen von 5 bis 600°C getrocknet werden und aushärten. Besonders bevorzugt werden die erfindungsgemäßen Formkörper oder Beschichtungen bei Temperaturen von 20 bis 200°C getrocknet, ganz besonders bevorzugt bei Temperaturen von 100 bis 150°C. Während des Trocknungsschrittes härten die erfindungsgemäßen Formkörper oder Beschichtungen aus. Je höher die Temperatur im Trocknungsschritt gewählt wird, desto fester und härter wird der Verbund der Füllstoffe.

Werden die erfindungsgemäßen Formkörper oder Beschichtungen für Hochtemperaturanwendungen, beispielsweise als Gießformen zur Herstellung von Metallgussteilen eingesetzt, so werden diese vorzugsweise nach dem Trocknen und Aushärten bei Temperaturen von 1000-1500°C gebrannt.

Gegenstand der Erfindung ist weiterhin die Verwendung der erfindungsgemäßen Formkörper und Beschichtungen als Baustoffe, Werkstoffe, Dämmstoffprodukte oder Gießformen zur Herstellung von Metallgussteilen. Beispiele für Baustoffe sind Balken, Stützen, Steine, Platten, Fliesen, Formstücke, Beschichtungen und Filter. Beispiele für Dämmstoffprodukte sind Wärme- und Schalldämmstoffe in Form von Steinen, Platten, Fliesen, Formstücken, Matten und Beschichtungen, welche beispielsweise zur Einrichtung, Herstellung und Isolation von Gebäuden, Industrieanlagen, Geräten, Behältern und Rohrleitungen verwendet werden können.

### Beispiele

### Herstellung von Alkoxysilangruppen und hydrophilen Gruppen enthaltenden Polyisocyanatderivaten (nicht erfindungsgemäß)

### Beispiel 1

In einem Sulfierbecher, der mit Rührer, Rückflusskühler, Thermometer und Stickstoffzuleitung ausgerüstet ist, wurden unter Stickstoff 195 g Desmodur® N 3300, 51,5 g N-Methylpyrrolidon und 10,1 g Dimethylolpropionsäure gemischt und auf 70°C erhitzt. Sobald der NCO-Gehalt unter 13,9 % abgefallen war, wurden 56,3 g Carbowax® 750 zugegeben und bei 70°C gerührt, bis ein NCO-Gehalt von 9,9 % erreicht worden war. Es wurden weitere 181 g N-Methylpyrrolidon zugegeben und auf 50°C abgekühlt. Anschließend wurden bei dieser Temperatur 272,8 g N-(3-Trimethoxysilylpropyl)asparaginsäurediethylester zugetropft. Der Reaktionsansatz wurde weiter gerührt, bis eine IR-spektrokopische Kontrolle keinen NCO-Peak mehr zeigte. Danach wurden 7,4 g Dimethylethanolamin zugegeben und 30 min bei 50°C nachgerührt. Man erhielt so eine 70 %ige Lösung in N-Methylpyrrolidon.

Das Produkt hat folgende Kenndaten:
Neutralisationsgrad: 1,107
Si-Gehalt bezogen auf den Feststoffgehalt: 4,0 %
Ionische Gruppen (COO⁻): 138 Milliäquivalente/kg
Ethylenoxideinheiten: 10,4 % bezogen auf den Feststoffgehalt

### Beispiel 2

In einem Sulfierbecher, der mit Rührer, Rückflusskühler, Thermometer und Stickstoffzuleitung ausgerüstet ist, wurden unter Stickstoff 195 g Desmodur® N 3300, 51,5 g N-Methylpyrrolidon und 10,1 g Dimethylolpropionsäure gemischt und auf 70°C erhitzt. Sobald der NCO-Gehalt unter 13,9 % abgefallen war, wurden 56,3 g Carbowax® 750 zugegeben und bei 70°C gerührt, bis ein NCO-Gehalt von 10,4 % erreicht worden war. Es wurden weitere 194,9 g N-Methylpyrrolidon zugegeben und auf 50°C abgekühlt. Anschließend wurden bei dieser Temperatur 305,4 g N-(3-Trimethoxysilylpropyl)asparaginsäurediethylester zugetropft. Der Reaktionsansatz wurde weiter gerührt, bis eine IR-spektrokopische Kontrolle keinen NCO-Peak mehr zeigte. Danach wurden 7,4 g Dimethylethanolamin zugegeben und 30 min bei 50°C nachgerührt. Man erhielt so eine 70 %ige Lösung in N-Methylpyrrolidon.

Das Produkt hat folgende Kenndaten:
Neutralisationsgrad: 1,107
Si-Gehalt bezogen auf den Feststoffgehalt: 3,8 %
Ionische Gruppen (COO-): 131 Milliäquivalente/kg
Ethylenoxideinheiten: 9,8 % bezogen auf den Feststoffgehalt

### Beispiel 3

In einem Sulfierbecher, der mit Rührer, Rückflusskühler, Thermometer und Stickstoffzuleitung ausgerüstet ist, wurden unter Stickstoff 195 g Desmodur® N 3300, 51,5 g N-Methylpyrrolidon und 6,9 g Dimethylolpropionsäure gemischt und auf 70°C erhitzt. Sobald der NCO-Gehalt unter 14,9 % abgefallen war, wurden 56,3 g Carbowax® 750 zugegeben und 100 g Copolyether 1 (Propylenglykol-gestarteter Ethylenoxid/Propylenoxid-Copolyether mit einem mittleren Molekulargewicht von 2000 mit 50 Gew.-% Propylenoxid und 50 Gew.-% Ethylenoxid, wobei 19 % des Ethylenanteils als endständiger Block vorliegen) zugegeben und bei 70°C gerührt, bis ein NCO-Gehalt von 7,4 % erreicht worden war. Es wurden weitere 264,7 g N-Methylpyrrolidon zugegeben und auf 50°C abgekühlt. Anschließend wurden bei dieser Temperatur 254,5 g N-(3-Trimethoxysilylpropyl)asparaginsäurediethylester zugetropft. Der Reaktionsansatz wurde weiter gerührt, bis eine IR-spektrokopische Kontrolle keinen NCO-Peak mehr zeigte. Danach wurden 4,9 g Dimethylethanolamin zugegeben und 30 min bei 50°C nachgerührt. Man erhielt so eine 66 %ige Lösung in N-Methylpyrrolidon.

Das Produkt hat folgende Kenndaten:
Neutralisationsgrad: 1,10
Si-Gehalt bezogen auf den Feststoffgehalt: 3,3 %
Ionische Gruppen (COO-): 81 Milliäquivalente/kg
Ethylenoxideinheiten: 17,2 % bezogen auf den Feststoffgehalt

### Herstellung von Bindern (nicht erfindungsgemäß)

### Beispiel 4

4,53 g des Produktes aus Beispiel 1 wurden in 62,15 g Levasil® 200, einer 30 %igen wässrigen Dispersion aus kolloidalem Siliciumdioxid, gelöst und eine Stunde lang bei Raumtemperatur gerührt.

### Beispiel 5

14,61 g des Produktes aus Beispiel 1 wurden in 34,1 g Levasil® 200, einer 30 %igen wässrigen Dispersion aus kolloidalem Siliciumdioxid, und 15 g Wasser eine Stunde lang bei Raumtemperatur gerührt.

### Beispiel 6

9,74 g des Produktes aus Beispiel 1 wurden in 45,46 g Levasil® 200, einer 30 %igen wässrigen Dispersion aus kolloidalem Siliciumdioxid, gelöst und eine Stunde lang bei Raumtemperatur gerührt.

### Beispiel 7

5,85 g des Produktes aus Beispiel 1 wurden in 54,56 g Levasil® 200, einer 30 %igen wässrigen Dispersion aus kolloidalem Siliciumdioxid, gelöst und eine Stunde lang bei Raumtemperatur gerührt.

### Herstellung von Formkörpern

Für die folgenden Beispiele wurde Perlit mit der Bezeichnung "EX ZF, 0-1,5 mm" der Firma NKF-Isotherm, Brüggen, verwendet. Vor dem Einsatz wurde der Perlit durch ein Sieb mit einer Maschenweite von 1 mm gesiebt.

### Beispiel 8

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der Binder aus Beispiel 4 zugesetzt. Anschließend wurde die erhaltene Mischung in Pressformen eingerüttelt und axial zu 8 Proben verpresst. Nach dem Entformen wurden vier Probenkörper bei 130°C 2 Stunden getrocknet und ausgehärtet (mittlere Pressdichte 200,8 ± 0,3 g/l) und vier der Probekörper wurden bei 180°C 2 Stunden getrocknet und ausgehärtet (mittlere Pressdichte 202,0 ± 0,7 g/l). Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.
Der Anteil an Polyisocyanat im Formkörper betrug, bezogen auf den Feststoffgehalt des Formkörpers, 3 Gew.-%.

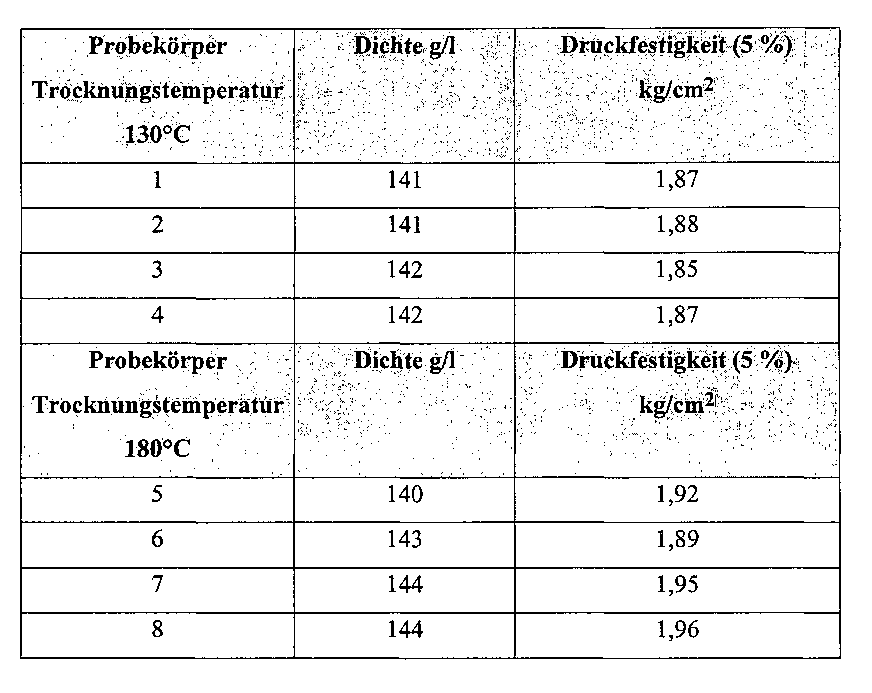

### Beispiel 9

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der Binder aus Beispiel 5 zugesetzt. Anschließend wurde die erhaltene Mischung in Pressformen eingerüttelt und axial zu 8 Proben unterschiedlicher Dichte verpresst. Nach dem Entformen wurden vier der Probenkörper bei 130°C 2 Stunden getrocknet und ausgehärtet und vier der Probekörper bei 180°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.

Der Anteil an Polyisocyanat im Formkörper betrug, bezogen auf den Feststoffgehalt des Formkörpers, 9,7 Gew.-%.

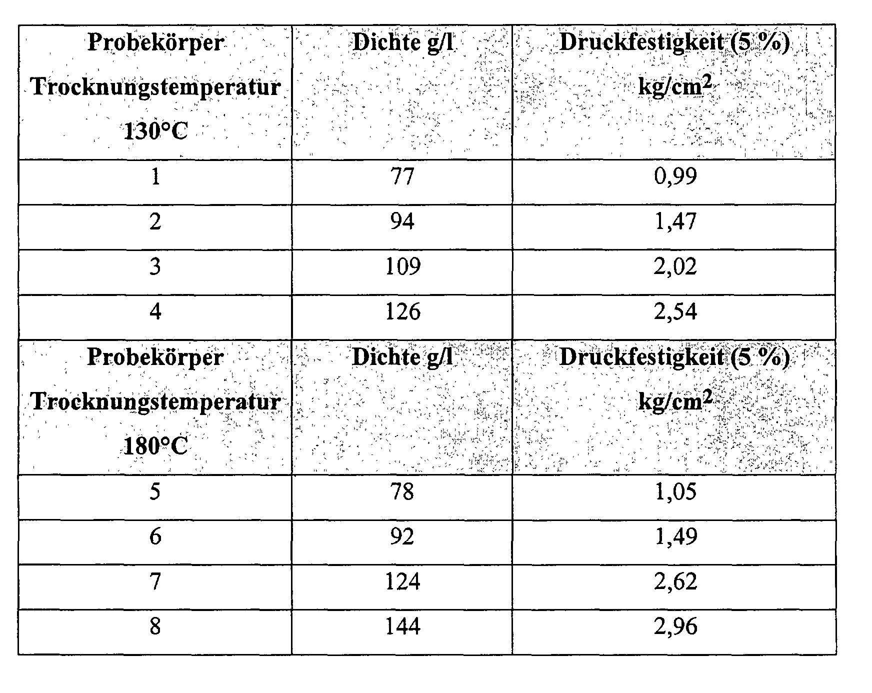

### Beispiel 10

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der Binder aus Beispiel 6 zugesetzt. Anschließend wurde die erhaltene Mischung in Pressformen eingerüttelt und axial zu 8 Proben (mittlere Pressdichte 194 ± 1,7 g/l) verpresst. Nach dem Entformen wurden die Probenkörper bei 130°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.
Der Anteil an Polyisocyanat im Formkörper betrug, bezogen auf den Feststoffgehalt des Formkörpers, 6,5 Gew.-%.

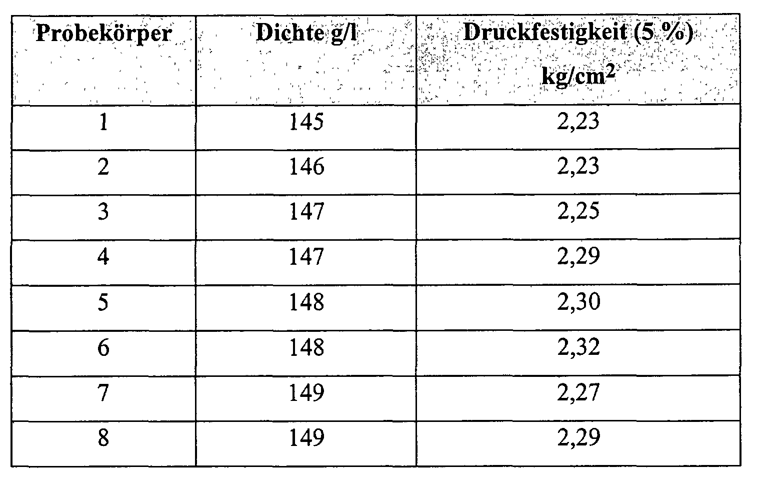

### Beispiel 11

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der Binder aus Beispiel 7 zugesetzt. Anschließend wurde die erhaltene Mischung in Pressformen eingerüttelt und axial zu 8 Proben (mittlere Pressdichte 194,8 ± 0,9 g/l) verpresst. Nach dem Entformen wurden die Probenkörper bei 130°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.
Der Anteil an Polyisocyanat im Formkörper betrug, bezogen auf den Feststoffgehalt des Formkörpers, 3,9 Gew.-%.

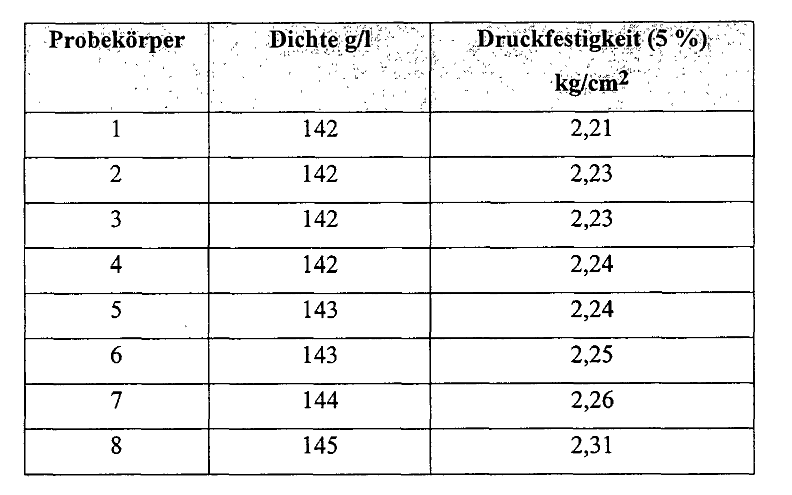

### Beispiel 12

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der Binder aus Beispiel 4 zugesetzt. Anschließend wurde die erhaltene Mischung in Pressformen eingerüttelt und axial zu 5 Proben mit den Abmessungen *∅* 7 x 4 cm³ (mittlere Pressdichte 181,4 ± 1,1 g/l) verpresst. Nach dem Entformen wurden die Probenkörper bei 130°C 2 Stunden getrocknet und ausgehärtet. Anschließend wurden die Proben zu Quadern der Abmessungen 4 x 4 x 5 cm³ zersägt und das Brandverhalten gemäß der DIN 4102, Prüfung von Baustoffen im Ofen, geprüft. Alle Proben erfüllen die Anforderungen des Tests für Baustoffe der Klasse A1 (nicht brennbar). Es wurde keine Entflammung und kein Temperaturanstieg beobachtet.

### Beispiel 13: Binder ohne Polyisocyanatderivat (nicht erfindungsgemäß)

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und 68,2 Levasil® 200, einer 30 %igen wässrigen Dispersion aus kolloidalem Siliciumdioxid zudosiert. Anschließend wurde die erhaltene Mischung in Pressformen eingerüttelt und axial zu 8 Proben (mittlere Pressdichte 203,8 ± 0,5 g/l) verpresst. Nach dem Entformen wurden die Probenkörper bei 130°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.

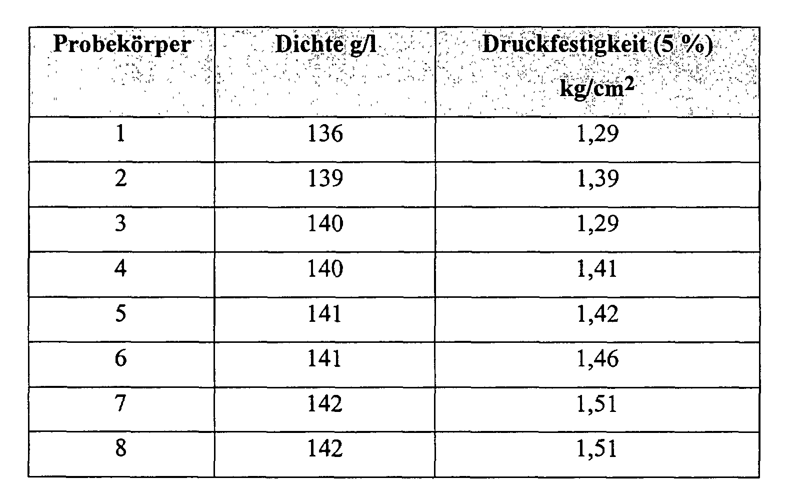

Im Vergleich zu den erfindungsgemäßen Formkörpern weisen die Formkörper aus Beispiel 13 bei gleichen Dichten geringere Druckfestigkeiten auf.

### Beispiel 14: Binder aus Wasserglas und kolloidalem Siliciumdioxid (nicht erfindungsgemäß)

### Herstellung des Binders

4,43 g Wasserglas (Si: Na-Verhältnis 3,25 : 1, SiO₂-Gehalt 26,9 %) wurden in 62,16 g Levasil® 200, einer 30 %igen wässrigen Dispersion aus kolloidalem Siliciumdioxid gelöst und 5 min gerührt.

### Herstellung von Formkörpern

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der oben beschriebene Binder aus Wasserglas und kolloidalem Siliciumdioxid zudosiert Anschließend wurde die erhaltene Mischung in Pressformen eingerüttelt und axial zu 4 Proben (mittlere Pressdichte 205,0 ± 0,8 g/l) verpresst. Nach dem Entformen wurden die Probenkörper bei 130°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.

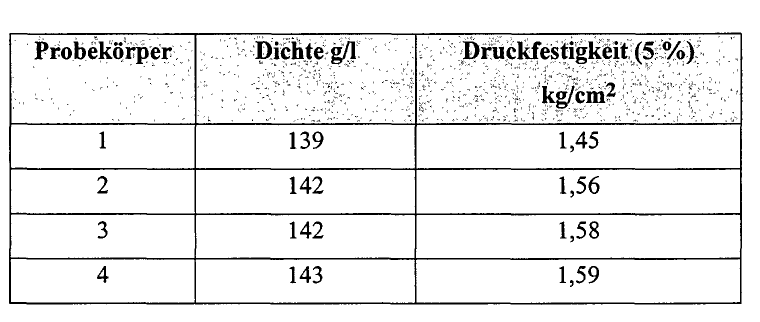

Im Vergleich zu den erfindungsgemäßen Formkörpern weisen die Formkörper aus Beispiel 14 bei gleichen Dichten geringere Druckfestigkeiten auf.

### Beispiel 15: Formkörper mit hohem Polyisocyanatderivat-Anteil (nicht erfindungsgemäß)

### Herstellung des Binders

29,3 g des Produktes aus Beispiel 1 wurden in 62,15 g Levasil® 200, einer 30%igen wässrigen Dispersion aus kolloidalem Siliciumdioxid gelöst und 1 Stunde lang bei Raumtemperatur gerührt.

### Herstellung von Formkörpern

85 g Perlit wurde in einem 10 l Eirichmischer gegeben. Nach dem Einfüllen wurde der Mischer in Gang gesetzt (Drehgeschwindigkeit des Tellers: Stufe 1, langsam, Wirbler ausgeschaltet) und der oben beschriebene Binder zugesetzt. Anschließend wurde die erhaltene Mischung in Pressformen eingerüttelt und axial zu 8 Proben (mittlere Pressdichte 239,5 ± 1,0 g/l) verpresst. Nach dem Entformen wurden vier der Probenkörper bei 130°C und vier der Probenkörper bei 180°C 2 Stunden getrocknet und ausgehärtet. Die Druckfestigkeiten der Proben wurden gemäß DIN 53421 bestimmt. Es wurden Proben ohne Nachbearbeitung mit ca. 5 cm Durchmesser und 3 cm Höhe verwendet. Die Druckfestigkeit wurde bei 5 % Stauchung bestimmt.
Der Anteil an Polyisocyanat im Formkörper betrug, bezogen auf den Feststoffgehalt des Formkörpers, 16,5 Gew.-%.

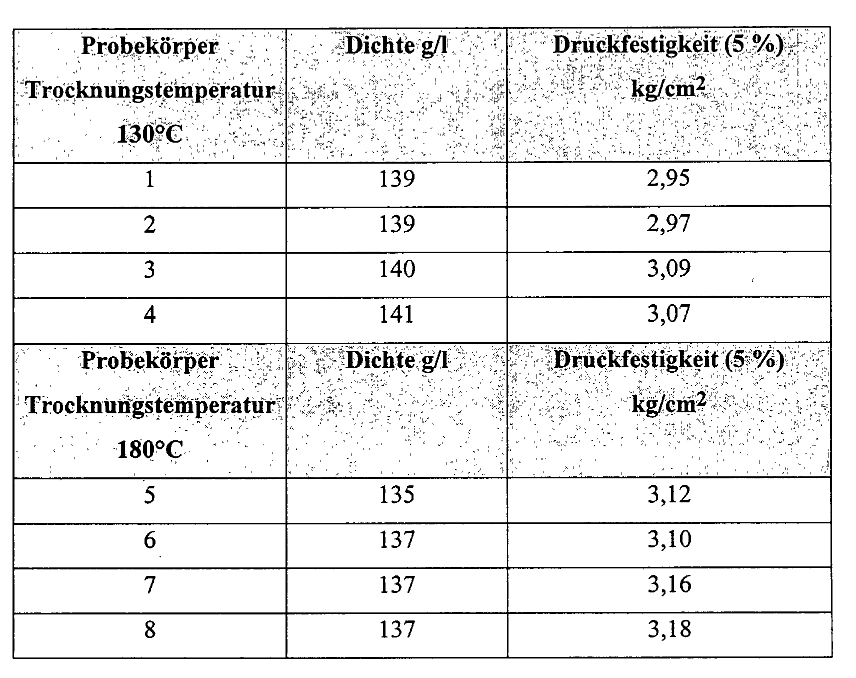

Im Vergleich zu den erfindungsgemäßen Formkörpern waren die Formkörper aus Beispiel 15 brennbar.

## Patentansprüche

1. Formkörper und Beschichtungen, enthaltend Füllstoffe mit einem mittleren Teilchendurchmesser > 400 nm und/oder einem Längen- zu Durchmesserverhältnis > 5 : 1 und Binder, enthaltend mindestens ein Hydrolyse- und/oder Kondensationsprodukt eines Alkoxysilylgruppen und hydrophile Gruppen enthaltenden Polyisocyanatderivates und kolloidales Siliciumdioxid, wobei der Anteil an Polyisocyanatderivat im Formkörper oder in der Beschichtung 1-10 Gew.-%, bezogen auf den Feststoffanteil, beträgt.

2. Formkörper und Beschichtungen gemäß Anspruch 1, **dadurch gekennzeichnet ist, dass** es sich um anorganische Füllstoffe aus der Reihe Metall-, Halbmetall-, und Nichtmetalloxide, -silikate- -nitride, -carbide, -carbonitride und -carbonate, Glas und Glaskeramik handelt.

3. Formkörper und Beschichtungen gemäß einem der vorangegangenen Ansprüche 1 und 2, **dadurch gekennzeichnet, dass** es sich bei den Füllstoffen um poröse Füllstoffe aus der Reihe Hohlkugelkorund, Hohlglaskügelchen, Blähglas, Perlit, Vermikulit, Blähton, Blähschamotte und Kieselgur handelt.

4. Formkörper und Beschichtungen gemäß einem der vorangegangenen Ansprüche 1 und 3, **dadurch gekennzeichnet, dass** der Binder 10-95 Gew.-% kolloidales Siliciumdioxid und 90-5 Gew.-% mindestens eines Hydrolyse- und/oder Kondensationsprodukt eines Alkoxysilylgruppen und hydrophile Gruppen enthaltenden Polyisocyanatderivates, bezogen auf den Feststoffanteil des Binders, enthält.

5. Formkörper und Beschichtungen gemäß einem oder mehreren der vorangegangenen Ansprüche 1 und 4, **dadurch gekennzeichnet, dass** das im Binder enthaltene kolloidale Siliciumdioxid zu 0-50 Gew.-% ersetzt ist durch kolloidales Aluminiumoxid und/oder Borsäure und/oder zu 0-10 Gew.-% ersetzt ist durch Hydrophobierungsmittel.

6. Formkörper und Beschichtungen gemäß einem oder mehreren der vorangegangenen Ansprüche 1 und 5, **dadurch gekennzeichnet, dass** es sich bei den Alkoxysilylgruppen und hydrophilen Gruppen enthaltenden Polyisocyanatderivaten um Reaktionsprodukte aus mindestens einer Polyisocyanatkomponente, einem aminofunktionellen Silan und mindestens einer hydrophilen Komponente handelt.

7. Formkörper und Beschichtungen gemäß Anspruch 6, **dadurch gekennzeichnet, dass** es sich bei den aminofunktionellen Silanen um solche der Formel (I) handelt,
R¹-NH-(CH₂)₃-SiXYZ (I)
worin
R¹ bevorzugt für einen unterhalb von 100°C gegenüber Isocyanatgruppen inerten organischen Rest steht und
X, Y, Z bevorzugt für gleiche oder verschiedene, unterhalb von 100°C gegenüber Isocyanatgruppen inerte organische Reste stehen, wobei mindestens ein Rest eine Alkoxygruppe ist.

8. Formkörper und Beschichtungen gemäß einem oder mehreren der vorangegangenen Ansprüche 1 bis 7, **dadurch gekennzeichnet**, sie zusätzlich Vernetzungskatalysatoren und/oder Formgebungsmittel enthalten.

9. Verfahren zur Herstellung von Formkörpern und Beschichtungen gemäß einem oder mehreren der vorangegangenen Ansprüche 1 bis 8, **dadurch gekennzeichnet, dass** Füllstoffe und Binder gemischt werden, gegebenenfalls Vemetzungskataylsatoren und/oder Formgebungsmittel zudosiert werden, diese Mischung anschließend eine Formgebung erfährt, getrocknet und ausgehärtet wird.

10. Verfahren gemäß Anspruch 9, **dadurch gekennzeichnet, dass** die Trocknung und Aushärtung bei Temperaturen von 5-600°C durchgeführt wird.

11. Verwendung von Formkörper und Beschichtungen gemäß einem oder mehreren der vorangegangenen Ansprüche 1 bis 8 als Baustoffe, Werkstoffe, Dämmstoffprodukte oder Gießformen zur Herstellung von Metallgussteilen.
